(19) Europäisches Patentamt
European Patent Office
Office européen des brevets

(11) **EP 1 956 046 B1**

(12) **EUROPEAN PATENT SPECIFICATION**

(45) Date of publication and mention
of the grant of the patent:
**18.07.2012 Bulletin 2012/29**

(51) Int Cl.:
***C08L 69/00*** *(2006.01)*     ***C08J 5/18*** *(2006.01)*
***C08K 3/00*** *(2006.01)*     ***G02B 5/02*** *(2006.01)*

(21) Application number: **06832853.3**

(22) Date of filing: **17.11.2006**

(86) International application number:
**PCT/JP2006/322974**

(87) International publication number:
**WO 2007/063724 (07.06.2007 Gazette 2007/23)**

(54) **POLYCARBONATE RESIN COMPOSITION FOR LIGHT DIFFUSION PLATE AND LIGHT DIFFUSION PLATE**

POLYCARBONATHARZZUSAMMENSETZUNG FÜR EINE LICHTDIFFUSIONSPLATTE UND LICHTDIFFUSIONSPLATTE

COMPOSITION DE RESINE DE POLYCARBONATE POUR PLAQUE DE DIFFUSION DE LA LUMIERE ET PLAQUE DE DIFFUSION DE LA LUMIERE

(84) Designated Contracting States:
**DE**

(30) Priority: **30.11.2005 JP 2005345196**

(43) Date of publication of application:
**13.08.2008 Bulletin 2008/33**

(73) Proprietors:
• **MITSUBISHI ENGINEERING-PLASTICS CORPORATION**
**Tokyo 105-0021 (JP)**
• **MITSUBISHI GAS CHEMICAL COMPANY, INC.**
**Chiyoda-ku,**
**Tokyo 100-8324 (JP)**

(72) Inventors:
• **SASAKI, Haruo**
**Hiratsuka-shi, Kanagawa 254-0016 (JP)**
• **MARUYAMA, Hiroyoshi**
**Hiratsuka-shi, Kanagawa 254-0016 (JP)**
• **ANDOU, Kazuhiro**
**Kashima-gun, Ibaraki 314-0102 (JP)**
• **ABE, Hisato**
**Kashima-gun, Ibaraki 314-0102 (JP)**

(74) Representative: **HOFFMANN EITLE**
**Patent- und Rechtsanwälte**
**Arabellastraße 4**
**81925 München (DE)**

(56) References cited:
JP-A- 08 073 724     JP-A- 09 208 684
JP-A- 11 001 551     JP-A- 2002 046 159
JP-A- 2004 109 162     JP-A- 2005 171 051
JP-A- 2005 284 237     US-A- 5 747 632

• DATABASE WPI Week 200446 Thomson Scientific, London, GB; AN 2004-483322 XP002538979 -& JP 2004 155984 A (TEIJIN KASEI LTD) 3 June 2004 (2004-06-03)
• DATABASE WPI Week 200577 Thomson Scientific, London, GB; AN 2005-752407 XP002538980 -& JP 2005 284237 A (SUMITOMO DOW LTD) 13 October 2005 (2005-10-13)

**Description**

TECHNICAL FIELD

The present invention relates to the use of a polycarbonate resin composition for reducing the luminance unevenness of light diffusion plates, and a light diffusion plate, and more particularly to the use of an aromatic polycarbonate resin composition suitable as a material of a light diffusion plate that is produced, in particular, by an injection molding method, and used as a constitutional element of a flat panel display for liquid crystal display devices; and a light diffusion plate obtained by molding the polycarbonate resin composition.

BACKGROUND ART

Aromatic polycarbonate resins have been extensively used in various applications because these resins are excellent in mechanical properties, heat resistance and weather resistance and exhibit a high light transmittance. As the applications utilizing these excellent properties of the polycarbonate resins, there are known, for example, light diffusion plates for a surface light source of a side light type or a directly-underlying back light type as used in liquid crystal displays or liquid crystal televisions (both hereinafter occasionally totally referred to merely as "liquid crystal display devices") of a small size having a diagonal dimension of about 20 inches at maximum.

In recent years, with the increase in size of these liquid crystal display devices, there is a large demand for not only increase in displaying area but also enhancement in luminance, so that those liquid crystal display devices using a surface light source of a directly-underlying back light type have come to dominate. The surface light source of a directly-underlying back light type is constituted, for example, from combination of a plurality of fluorescent tubes arranged in parallel, a reflection plate disposed on a back side thereof, and a light diffusion plate forming a light-emitting surface.

In general, the light diffusion plate is produced by an injection molding method or a casting method (for example, refer to Japanese Patent Application Laid-open (KOKAI) No. 08-134310). Also, in the above applications of small-size light diffusion plates, acrylic resins have been conventionally frequently used as a raw material therefor because of good performance and low costs. On the other hand, light diffusion plates made of aromatic polycarbonate resins are excellent in qualities such as impact resistance and dimensional stability as compared to those made of acrylic resins and, therefore, have been gradually increased in percentage of use thereof.

In particular, the large-size light diffusion plates having, for example, a diagonal dimension of not less than 32 inches tend to suffer from various problems when produced from acrylic resins exhibiting a relatively high moisture-absorption and, therefore, there is an increasing tendency that these large-size light diffusion plates are produced from aromatic polycarbonate resins. More specifically, the large-size light diffusion plates made of the acrylic resins tend to undergo remarkable warpage owing to change in environmental conditions upon use, thereby causing such a significant problem that the light diffusion plates come into contact with a liquid crystal display portion, which further tends to result in increased unevenness of luminance of a liquid crystal plate. For this reason, the large-size light diffusion plates having a diagonal dimension of not less than 32 inches which are produced from aromatic polycarbonate resins have increasingly come to dominate.

The light diffusion plates made of polycarbonate resins are usually formed into a plate shape having a predetermined thickness by a melt-extrusion method. In recent years, in order to reduce production costs, there have been studied the method of producing the diffusion plates by an injection molding method. However, in the case where the light diffusion plates having a diagonal dimension exceeding 14 inches, for example, a diagonal dimension of 20 inches, are produced by the injection molding method, the distance from a gate to a distal end of a melt flow tends to be prolonged, so that the molding tends to be difficult. More specifically, in an ordinary injection molding process, lack of pressure owing to cooling and solidification (volume shrinkage) of molten resins is compensated with application of dwell pressure. However, if the distance from the gate is too long, the dwell pressure does not effectively act on portions remote from the gate, thereby failing to obtain a molded product having a uniform thickness owing to occurrence of sinks, and resulting in deteriorated transfer property of a surface shape of a mold cavity onto the molded product.

In addition, although resin compositions for light diffusion plates contain a diffusing agent, it may be difficult to allow the resin compositions in which the diffusing agent is uniformly dispersed, to pass through a narrow sprue runner and uniformly flow into a thin and wide-area cavity. As a result, it may be extremely difficult to obtain a light diffusion plate of a flat-plate shape capable of satisfying all of the requirements such as optical properties, dimensional stability and mechanical strength.

In order to improve a fluidity of resins, there has been proposed the method of using aromatic polycarbonates containing a specific end group (specifically, tert-octylphenoxy group) and having a viscosity-average molecular weight of 10,000 to 40,000, as the raw resin (for example, refer to Japanese Patent Application Laid-open (KOKAI) No. 2001-208917).

Meanwhile, in the directly-underlying back light type used in the large-size liquid crystal display devices, there tends to arise such a problem that a light-emitting surface thereof suffers from a relatively large unevenness of luminance. In particular, there tends to arise such a problem that unevenness of images on a displaying screen occurs owing to periodic unevenness of luminance caused by increase in a luminance just above a fluorescent tube as compared to the other portions. There is known the method of reducing the unevenness of luminance by disposing the light-emitting surface (light diffusion plate) spaced apart from the fluorescent tube. However, in such a method, it is required to increase a thickness of the back light device. Therefore, the method is unsuitable for liquid crystal display devices which tend to be recently reduced in thickness thereof.

To solve the above problems, there has been proposed the method of suppressing the periodic unevenness of luminance by using a diffusion plate capable of equalizing a luminance. More specifically, there have been proposed, for example, the method of applying titanium oxide or glass short fibers as a light-diffusing agent onto the surface of a light diffusion plate, or incorporated the light-diffusing agent thereinto (for example, refer to Japanese Patent Applications Laid-open (KOKAIs) No. 63-33703 and No. 01-172801), and the method of forming irregularities on the surface of a light diffusion plate (for example, refer to Japanese Patent Application Laid-open (KOKAI) No. 02-13925). Further, there has been proposed the diffusion plate capable of satisfying both a light-diffusing function and increased amount of light emitted by integrally laminating two layers respectively having separate functions, i.e., the light-diffusing function and light-focusing function (for example, refer to Japanese Patent Application Laid-open (KOKAI) No. 05-173134).

DISCLOSURE OF THE INVENTION

PROBLEM TO BE SOLVED BY THE INVENTION

However, with the recent tendency of increase in size of liquid crystal display devices, in order to stably supply light diffusion plates having a high performance, various problems have been still kept unsolved. For example, upon producing the light diffusion plates with a high productivity by an injection molding method, the above method using the aromatic polycarbonates tends to have such a problem that deposits onto a metal mold used therein are readily produced upon molding.

As to the unevenness of luminance of the light diffusion plates, in the above method using titanium oxide or glass short fibers as a light-diffusing agent, there tends to arise such a problem that when the amount of the light-diffusing agent used is increased in order to enhance its light-diffusing function, the amount of light emitted therefrom is reduced, resulting in lack of lightness on a displaying screen upon practical use. In addition, in the method of forming irregularities on the surface of the light diffusion plate, although the amount of light emitted therefrom is larger than that emitted from the light diffusion plate using the light-diffusing agent, there tends to arise such a problem that a light-diffusing function of the latter light diffusion plate is insufficient because it utilizes light scattering owing to a surface shape of the sheet.

Also, as the method of forming irregularities on the surface of the light diffusion plate, there are known a profile extrusion method, a roll embossing method that is conducted while extrusion-molding, a heat-pressing method for flat plates, a monomer-casting method, etc. However, in these methods, the production process used therein tend to be complicated, and fine irregularities on the surface of the mold cannot be sufficiently transferred onto the surface of the diffusion plate, thereby failing to reduce the unevenness of luminance to a sufficient extent.

MEANS FOR SOLVING PROBLEM

As a result of the present inventors' earnest study for providing a light diffusion plate for liquid crystal displays which can be produced with an excellent productivity by an injection molding method, and have a thin thickness and a large size (wide area) and are excellent in dimensional stability, optical properties and mechanical strength, the following finding has been attained.

More specifically, it has been found that when using a specific aromatic polycarbonate resin together with fine particles having a specific particle diameter as a diffusing agent, the resultant aromatic polycarbonate resin composition exhibits a good fluidity upon injection molding, and at the same time, occurrence of deposits on a metal mold can be suppressed, and further the obtained injection-molded product of a flat-plate shape (light diffusion plate) simultaneously satisfies excellent dimensional stability, optical properties and mechanical strength, in particular, even when formed into a large-size light diffusion plate having a diagonal dimension of not less than 32 inches.

The present invention has been attained on the basis of the above finding. The present invention provides the use of a polycarbonate resin composition for reducing the luminance unevenness of light diffusion plates, the composition comprising (A) 100 parts by weight of an aromatic polycarbonate resin having a viscosity-average molecular weight of not less than 12,000 and less than 15,000 and containing a low-molecular weight component having a molecular weight of less than 1,000 in an amount of not more than 2.5% by weight, and (B) 0.2 to 20 parts by weight of fine particles having a weight-average particle diameter of 0.7 to 30 $\mu$m wherein the aromatic polycarbonate resin is produced by using bisphenol A as a raw material.

EFFECT OF THE INVENTION

In accordance with the present invention, there can be provided a large-size light diffusion plate which can be produced with a high productivity by an injection molding method, and is free from formation of deposits on a metal mold upon molding, and excellent in all of the properties including dimensional stability, mechanical strength and optical properties.

PREFERRED EMBODIMENTS FOR CARRYING OUT THE INVENTION

The present invention is described in detail below.

<Aromatic polycarbonate resin (A)>

The aromatic polycarbonate resin (A) used in the present invention is in the form of a linear or branched thermoplastic polymer or copolymer which may be produced, for example, by an interfacial polymerization method (phosgene method) in which bisphenol A is used optionally together with a small amount of a polyhydroxy compound as raw materials, and these raw materials are reacted with phosgene, or a melting method (transesterification method) in which the raw materials are reacted with a carbonic diester.

Further, in the present invention, an aromatic monovalent hydroxy compound may also be used as a molecular weight controller. Specific examples of the aromatic monovalent hydroxy compound may include m- and p-methyl phenols, m- and p-propyl phenols, p-bromophenol, p-tert-butyl phenol and p-long chain alkyl-substituted phenols.

The aromatic polycarbonate resin (A) used in the present invention has a viscosity-average molecular weight of not less than 12,000 and less than 15,000. When the viscosity-average molecular weight of the aromatic polycarbonate resin (A) is too small, the resultant light diffusion plate tends to be unpractically deteriorated in rigidity. When the viscosity-average molecular weight of the aromatic polycarbonate resin (A) is too large, the aromatic polycarbonate resin composition of the present invention tends to be deteriorated in fluidity, so that the resultant light diffusion plate tends to exhibit a large unevenness of a thickness thereof. The viscosity-average molecular weight of the aromatic polycarbonate resin (A) is preferably not less than 13,000 and less than 15,000, and more preferably not less than 14,000 and less than 15,000. Meanwhile, the viscosity-average molecular weight (Mv) may be measured by the method described in the below-mentioned Examples.

In the aromatic polycarbonate resin (A) used in the present invention, the content of a low-molecular weight component having a molecular weight of less than 1,000 is not more than 2.5% by weight. When the content of the low-molecular weight component is more than 2.5% by weight, deposits tend to be formed on a metal mold upon molding. The content of the low-molecular weight component in the aromatic polycarbonate resin (A) is preferably not more than 2.3% by weight and more preferably not more than 2.0% by weight. The content of a low-molecular weight component having a molecular weight of less than 1,000 may be measured by the method described in the below-mentioned Examples.

Also, the molecular weight distribution of the aromatic polycarbonate resin (A) used in the present invention, i.e., the ratio of a weight-average molecular weight to a number-average molecular weight thereof (Mw/Mn) in terms of polystyrene, is usually in the range of from 1.5 to 2.7. When the molecular weight distribution is less than 1.5, the resultant composition tends to be insufficient in fluidity and transfer property. When the molecular weight distribution is more than 2.7, deposits tend to be formed on a metal mold upon molding. The molecular weight distribution of the aromatic polycarbonate resin (A) is preferably from 1.6 to 2.6 and more preferably from 1.7 to 2.5. The molecular weight distribution (Mw/Mn) may be measured by the method described in the below-mentioned Examples.

The above aromatic polycarbonate resin having the specific molecular weight, the specific molecular weight distribution and the specific content of the low-molecular weight component as described above may be produced, for example, by controlling an amount of the molecular weight controller used and a time of addition thereof.

<Fine particles (B)>

The fine particles (B) used in the present invention may be any conventionally known optional fine particles capable of acting as a light diffusing agent. As the fine particles (B), there may be used various inorganic or organic particles without any particular limitations. However, it is important that the weight-average particle diameter of the fine particles lies within the range of 0.7 to 30 $\mu$m. When the weight-average particle diameter of the fine particles is less than 0.7 $\mu$m, the resultant resin composition tends to be deteriorated in light diffusing property, so that the underlying light source tends to be seen through the light diffusion plate, resulting in deteriorated visibility of images displayed. When the weight-average particle diameter of the fine particles is more than 30 $\mu$m, the diffusion effect relative to the amount of the fine particles added tends to be lowered, resulting in deteriorated luminance. The weight-average particle diameter of the fine particles (B) is preferably 1 to 20 $\mu$m and more preferably 2 to 10 $\mu$m. The weight-average particle diameter of the fine particles may be measured, for example, by a Coulter method (using a Coulter Multisizer).

Specific examples of the fine particles (B) used in the present invention may include inorganic fine particles such as fine particles of barium sulfate, talc, calcium carbonate, silica, glass, etc., and organic fine particles such as fine particles of silicone-based resins, acrylic resins, benzoguanamine-based resins, styrene-based resins, butadiene-based resins, etc. Among these fine particles, preferred are the organic fine particles.

As the organic fine particles, more preferred are such organic fine particles having a crosslinked structure in which main chains constituting organic polymer molecules thereof are crosslinked with each other are preferred, in particular, such organic fine particles which are free from deformation upon actual use and can maintain the condition of fine particles even during the step of processing the resultant polycarbonate resin composition of the present invention, for example, upon injection molding thereof.

More specifically, the fine particles are preferably kept in a substantially non-melted state in the aromatic polycarbonate resin even when heated to a molding temperature (350°C) of the aromatic polycarbonate resin having a relatively low molecular weight. Examples of such fine particles may include fine particles of crosslinked acrylic resins or silicone-based resins. Among these fine particles, especially preferred are polymer fine particles which are basically made of partially crosslinked methyl methacrylate, and constituted from polymer particles each having a core made of poly(butyl acrylate) and a shell made of poly(methyl methacrylate), or polymer particles each having a core/shell morphology including a core and a shell made of a rubber-like vinyl polymer.

Also, from the standpoint of a good light diffusing property, it is preferred that the difference ($\Delta$n) between a refractive index of the fine particles (B) used in the present invention and that of the aromatic polycarbonate resin (A) is not less than 0.01, and the fine particles (B) are non-compatible with the aromatic polycarbonate resin (A). The "refractive index" used herein means the value measured at 25°C using a d ray (587.562 nm; He). The measurement of the refractive index is actually carried out as follows. That is, the refractive index (npc) of the polycarbonate resin is measured by a V block method (using "Type KRP" manufactured by Kalnew Optical Co., Ltd.), whereas the refractive index (nld) of the fine particles is measured by a Becke method (method of comparing with a standard solution).

The aromatic polycarbonate resin (A) used in the present invention is preferably an aromatic polycarbonate resin produced by using bisphenol A as a raw material, and the refractive index thereof is usually 1.58. Therefore, as the fine particles (B), there are preferably used those fine particles whose refractive index is different by not less than 0.01 from that of the above aromatic polycarbonate resin.

In addition, in order to fully exhibit the light diffusing property and suppress such a defect that the light source behind the light diffusion plate is seen therethrough, and further in order to exhibit a sufficient luminance, the difference between the refractive index of the fine particles (B) and that of the aromatic polycarbonate resin (A) is preferably not less than 0.05 and more preferably not less than 0.07.

The content of the fine particles (B) in the aromatic polycarbonate resin composition of the present invention is 0.2 to 20% by weight on the basis of 100% by weight of the aromatic polycarbonate resin (A). When the content of the fine particles (B) is too small, there tends to arise such a problem that the light source is seen through the light diffusion plate owing to a poor light diffusing property thereof. When the content of the fine particles (B) is too large, the obtained light diffusion plate tends to be deteriorated in light transmittance, thereby failing to attain a necessary luminance. The content of the fine particles (B) is preferably 0.5 to 5% by weight.

<u><Fluorescent brightener (C)></u>

The polycarbonate resin composition of the present invention may further contain a fluorescent brightener (C). The fluorescent brightener has the effect of absorbing an energy of an ultraviolet portion of light and discharging the thus absorbed energy to a visible portion thereof. In the present invention, as the fluorescent brightener, there may be used, for example, any conventionally known optional fluorescent dyes or pigments as well as optional white organic luminescent materials or optional blue organic luminescent materials conventionally known as those used for organic EL.

Examples of the fluorescent brighteners used for improving a color tone of synthetic resins, etc., to show a white color or a bluish white color, may include benzoxazole-based compounds, stilbene-based compounds, benzimidazole-based compounds, naphthalimide-based compounds, rhodamine-based compounds, cumarin-based compounds and oxazine-based compounds. Examples of the white organic luminescent materials or blue organic luminescent materials may include distyrylbiphenyl-based blue fluorescent materials, arylethynylbenzene-based blue fluorescent materials, quinque-pyridine-based fluorescent materials, sexi-phenyl-based blue fluorescent materials, dimesitylborylanthracene-based fluorescent materials and quinacridone-based fluorescent materials.

Among the above fluorescent brighteners, from the standpoint of a good heat stability, preferred are white or blue fluorescent brighteners selected from benzoxazole-based compounds and cumarin-based compounds. Further, from the standpoint of a good heat resistance, preferred are so-called high-molecular weight fluorescent brighteners having a molecular weight of 300 to 1,000, and more preferred are benzoxazole-based compounds and cumarin-based compounds.

Specific examples of the benzoxazole-based compounds include 4-(benzoxazol-2-yl)-4'-(5-methylbenzoxazol-2-yl)stilbene, 4,4'-bis(benzoxazol-2-yl)stilbene and 4,4'-bis(benzoxazol-2-yl)furan. Among these benzoxazole-based compounds, preferred are stilbene benzoxazole-based compounds such as 4,4'-bis(benzoxazol-2-yl)stilbene.

Specific examples of the cumarin-based compounds include 3-phenyl-7-aminocumarin, 3-phenyl-7-(imino-1',3',5'-triazine-2'-diethylamino-4'-chloro)cumarin, 3-phenyl-7-(imino-1',3',5'-triazine-2'-diethylamino-4'-methoxy)cumarin, 3-phenyl-7-naphthotriazole cumarin and 4-methyl-7-hydroxycumarin. Among these cumarin-based compounds, preferred are phenylaryltriazolyl cumarin-based compounds such as 3-phenyl-7-naphthotriazole cumarin.

The content of the fluorescent brightener (C) in the polycarbonate resin composition is usually 0.0005 to 0.1 part by weight, preferably 0.001 to 0.1 part by weight, more preferably 0.001 to 0.05 part by weight and still more preferably 0.005 to 0.02 part by weight on the basis of 100 parts by weight of a total amount of the aromatic polycarbonate resin (A) and the fine particles (B). When the content of the fluorescent brightener (C) is too small, the resultant light diffusion plate may fail to exhibit a sufficient surface light-emitting property, or a sufficient effect of improving a color tone of the light emitting surface tends to be unattainable. When the content of the fluorescent brightener (C) is too large, the effect of improving a color tone of the light emitting surface tends to be lowered, and rather the light emitting surface tends to undergo unevenness of the color tone (hue) thereof.

The aromatic polycarbonate resin composition of the present invention may also contain various additives unless the addition of these additives adversely affects the effects of the present invention. Examples of the additives include antioxidants, mold release agents, antistatic agents, colorants, heat stabilizers, flow modifiers, flame retardants and agglomeration inhibitors.

Specific examples of the heat stabilizers include phosphorous acid, phosphoric acid, phosphites, phosphates and phosphonates. Specific examples of the ultraviolet light absorbers include triazole-based compounds, acetophenone-based compounds and salicylic acid esters. Specific examples of the flame retardants include decabromodiphenylene ether, etc. Specific examples of the flame retarding assistants include antimony trioxide, etc.

In particular, in order to enhance a light transmittance and a hue of the polycarbonate resin composition, a phosphorus-based heat stabilizer is preferably added to the composition. Examples of the phosphorus-based heat stabilizer include phosphites and phosphates.

Specific examples of the phosphites include triesters, diesters and monoesters of phosphorous acid, such as triphenyl phosphite, trisnonylphenyl phosphite, tris(2,4-di-tert-butylphenyl)phosphite, trinonyl phosphite, tridecyl phosphite, trioctyl phosphite, trioctadecyl phosphite, distearyl pentaerythritol diphosphite, tricyclohexyl phosphite, monobutyl diphenyl phosphite, monooctyl diphenyl phosphite, bis(2,4-di-tert-butylphenyl)pentaerythritol phosphite, bis(2,6-di-tert-butyl-4-methylphenyl)pentaerythritol phosphite and 2,2-methylene-bis(4,6-di-tert-butylphenyl)octyl phosphite.

Specific examples of the phosphates include trimethyl phosphate, triethyl phosphate, tributyl phosphate, trioctyl phosphate, triphenyl phosphate, tricresyl phosphate, tris(nonylphenyl)phosphate, 2-ethylphenyldiphenyl phosphate and tetrakis(2,4-di-tert-butylphenyl)-4,4-diphenylene phosphonite.

Among these phosphorus-based heat stabilizers, preferred are phosphites such as distearyl pentaerythritol diphosphite, bis(2,4-di-tert-butylphenyl)pentaerythritol phosphite, bis(2,6-di-tert-butyl-4-methylphenyl)pentaerythritol phosphite and tris(2,4-di-tert-butylphenyl)phosphite, and more preferred are phosphites such as bis(2,6-di-tert-butyl-4-methylphenyl)pentaerythritol phosphite and tris(2,4-di-tert-butylphenyl)phosphite. Meanwhile, these phosphorus-based heat stabilizers may be used in combination of any two or more thereof.

The content of the phosphorus-based heat stabilizer in the polycarbonate resin composition is usually 0.005 to 0.2 part by weight, preferably 0.01 to 0.1 part by weight and more preferably 0.02 to 0.05 part by weight on the basis of 100 parts by weight of the aromatic polycarbonate resin (A). When the content of the phosphorus-based heat stabilizer is too small, the effect of the heat stabilizer added tends to be lowered. When the content of the phosphorus-based heat stabilizer is too large, the effect corresponding to such a large amount of the heat stabilizer added tends to be unattainable, and rather the composition tends to suffer from undesirable hydrolysis.

The method for producing the polycarbonate resin composition of the present invention is not particularly limited. For example, there may be used the method of mixing predetermined amounts of the additives with the polycarbonate resin (A) and then kneading the resultant mixture. The mixing and kneading may be conducted by the methods used for ordinary thermoplastic resins. Examples of the mixing and kneading methods include those methods using a ribbon blender, a Henschel mixer, a Banbury mixer, a drum tumbler, a single-screw extruder, a twin-screw extruder, a multi-screw extruder, etc. The kneading temperature is usually 230 to 300˚C, preferably 235 to 280˚C and more preferably 240 to 260˚C.

<Light diffusion plate>

The light diffusion plate has an optional shape. The thickness of the light diffusion plate may be appropriately selected and determined. In view of a good strength, etc., the thickness of the light diffusion plate is usually 0.5 to 3 mm, preferably 1 to 3 mm and more preferably 1.5 to 2.5 mm.

The light diffusion plate may be produced by general methods for molding thermoplastic resins. For example, pellets of the resin composition may be molded by an injection molding method, an injection compression molding method or an extrusion molding method. The extrusion-molded product of a sheet shape may be further subjected to vacuum forming or blow molding to produce the light diffusion member as aimed.

Examples of the light diffusion plate may include light diffusion sheets or light diffusion plates used for illumination covers, illumination fascias, transmission-type screens, various displays, liquid crystal display devices, etc. In particular, the effects of the present invention are more remarkably exhibited when the light diffusion plate is applied to a flat plate-shaped light diffusion sheet or light diffusion plate which is used as a member for a light source unit in various liquid crystal display devices. The light diffusion plate may be suitably used as a flat plate-shaped light diffusion plate whose main flat surfaces each have an area of not less than 0.3 $m^2$, in particular, such a diffusion plate for large-size liquid crystal display devices which has a diagonal dimension of not less than 32 inches (0.81 m).

The light diffusion plate may be processed by conventionally known methods such as embossing, V-grooving and ridging to form irregularities on the main flat surfaces thereof for the purpose of further enhancing a light diffusing property thereof. By forming the irregularities on the main flat surfaces by the above processing methods, the amount of the fine particles used in the light diffusion plate may be reduced while maintaining a good light diffusing property thereof.

As the processing method for forming the irregularities, there may be used the method of forming fine irregularities such as dots and lines on at least one cavity surface of a metal mold used, for example, when producing the light diffusion plate by an injection molding method. According to such a method, the irregularities can be directly transferred onto the polycarbonate resin composition which is filled in the cavity of the metal mold, so that it is possible to form a reflection layer pattern for reflecting a light transmitted through an inside of the diffusion plate toward the side of liquid crystal display or a light diffusing layer pattern for diffusing and emitting a light on the front face side (light-emitting side) of the diffusion plate. In addition, the irregularities may be formed on the both cavity surfaces of the metal mold to simultaneously transfer the reflection layer pattern and the light diffusing layer pattern on the light-emitting side onto the polycarbonate resin composition filled therein.

Although the irregularities may be directly formed on inner cavity surfaces of the metal mold, from the standpoints of easiness of forming the patterns and simple replacement of the patterns into different ones, a cavity insert plate previously processed to form irregularities on the surface thereof is preferably inserted and fitted into the metal mold, or attached or bonded thereonto. The irregularities may be formed, for example, by a stamper method, a sand blast method, an etching method, a laser processing method, an electro-casting method, etc. Also, the pattern to be formed on the light diffusion plate may be designed by an optical simulation method, etc. For example, the reflection layer pattern as an alternate of a printed pattern may be such a light diffusing pattern whose density and size are increased with the increase in distance from a cold cathode tube as a light source, in order to enable uniform diffusion of a light emitted from a surface thereof as a whole. The material of the cavity insert plate may be any material suitable for forming the irregularities, and the thickness of the cavity insert plate is preferably as small as possible.

It is effective to form a plating layer on irregularity-free portions of the mold cavity surface in order to enhance a mirror finished surface property thereof and facilitate release of the resultant molded product from the metal mold. Examples of the plating layer include those made of titanium carbide (TiC), titanium nitride (TiN), tungsten carbide ($W_2C$), chromium (Cr), nickel (Ni), etc. Further, it is also effective to polish the mold cavity surface after conducting the plating treatment.

EXAMPLES

The present invention is described in more detail below by the following Examples. However, these Examples are only illustrative and not intended to limit a scope of the present invention unless departing therefrom.

Raw materials used and properties thereof:

(A-1) (PC-1): Aromatic polycarbonate produced in the below-mentioned Production Example 1; Mv: 14,000; Mw/Mn: 2.4; content of low-molecular weight component (having a molecular weight of less than 1,000): 1.8% by weight; refractive index: 1.58

(A-2) (PC-2): Aromatic polycarbonate produced in the below-mentioned Production Example 2; Mv: 14,500; Mw/Mn: 2.4; content of low-molecular weight component (having a molecular weight of less than 1,000): 1.8% by weight; refractive index: 1.58

(A-3) (PC-3): Aromatic polycarbonate produced in the below-mentioned Production Example 3; Mv: 14,000; Mw/Mn: 2.6; content of low-molecular weight component (having a molecular weight of less than 1,000): 2.2% by weight;

refractive index: 1.58

(A-4) (PC-4): Aromatic polycarbonate produced in the below-mentioned Production Example 4; Mv: 14,000; Mw/Mn: 2.9; content of low-molecular weight component (having a molecular weight of less than 1,000): 2.6% by weight; refractive index: 1.58

(A-5) (PC-5): Aromatic polycarbonate "IUPILON H-4000" produced by Mitsubishi Engineering-Plastics Corporation; Mv: 16,000; Mw/Mn: 2.4; content of low-molecular weight component (having a molecular weight of less than 1,000): 1.4% by weight; refractive index: 1.58

(A-6) (PC-6): Aromatic polycarbonate "IUPILON H-3000" produced by Mitsubishi Engineering-Plastics Corporation; Mv: 19,000; Mw/Mn: 2.4; content of low-molecular weight component (having a molecular weight of less than 1,000): 1.2% by weight; refractive index: 1.58

(B) Fine particles: "GM-0630H" produced by GANZ Chemical Co., Ltd.; refractive index: 1.49; average particle diameter: 6 $\mu$m (acrylic resin)

(C) Fluorescent brightener: "Uvitex OB-ONE" produced by Ciba Corp.; (4,4'-bis(benzoxazol-2-yl)stilbene)

Measurements of properties of resin composition and evaluation methods therefore:

(1) Viscosity-average molecular weight (Mv):

Using an Ubbelohde viscometer, the intrinsic viscosity [η] was measured at 20°C in a methylene chloride solvent, and the viscosity-average molecular weight was calculated according to the following formula:

$$[\eta] = 1.23 \times 10^{-4} \times (Mv)^{0.83}$$

(2) Method of measuring molecular weight distribution (Mw/Mn):

The molecular weight distribution (Mw/Mn) was measured by gel permeation chromatography. The apparatus and conditions used upon the measurement are shown in Table 2 below.

Table 2

| Apparatus | "Alliance" manufactured by Waters Corp. |
|-----------|------------------------------------------|
| Column | "Shodex K-805L" (x 2) manufactured by Showa Denko Co., Ltd. |
| Detector | UV detector: 254 nm |
| Eluent | Chloroform |

After conducting the measurement by using polystyrene as a standard polymer, the relation between an elution time and a molecular weight of polycarbonate (PC) was determined by a Universal Calibration method to prepare a calibration curve thereof. The elution curve (chromatogram) of PC was prepared under the same measuring conditions as used for preparing the calibration curve, and the respective average molecular weights were determined from the elution time (molecular weight) and peak area (number of molecules). When the molecular weight is expressed by Mi and the number of molecules is expressed by Ni, the number-average molecular weight and weight-average molecular weight are respectively represented by the following formulae. Also, there is used the following conversion formula.
(Number-average molecular weight)

$$Mn = \Sigma(NiMi)/\Sigma Ni$$

(Weight-average molecular weight)

$$Mw = \Sigma(NiMi^2)/\Sigma(NiMi)$$

(Conversion formula)

$$MPC = 0.47822MPS^{1.01470}$$
$$MPS = 2.0689MPC^{0.98551}$$

In the above formulae, MPC represents a molecular weight of PC, and MPS represents a molecular weight of PS. These formulae are determined from a Mark-Houwink formula showing the relation between the intrinsic viscosity [η] and the molecular weight M as described below.

$$[\eta] = KM^{\alpha}$$

As the values of K and $\alpha$, K = 1.11 x 10$^{-4}$ and $\alpha$ = 0.725 were used in the case of PS, and K = 3.89 x 10$^{-4}$ and $\alpha$ = 0.700 were used in the case of PC.

The elution curve (chromatogram) of polycarbonate was prepared under the same measuring conditions as used for preparing the calibration curve, and the respective average molecular weights were determined from the elution time (molecular weight) and peak area (proportional to number of molecules) of the elution time.

(3) Method of measuring content of low-molecular weight component (having a molecular weight of less than 1,000):

The content of the low-molecular weight component was measured by the above GPC method. The ratio of a peak area of the low-molecular weight component having a molecular weight of less than 1,000 in terms of PC to a peak area of a whole PC sample was determined as the content of the low-molecular weight component.

(4) Total light transmittance:

Using a turbidity meter "NDH-2000 Model" produced by Nippon Denshoku Kogyo Co., Ltd., the respective test specimens molded in the following Examples and Comparative Examples were subjected to measurement of a total light transmittance (%) thereof.

(5) Diffusion rate:

Using "GP-5 GONIOPHOTOMETER" produced by MURAKAMI COLOR RESEARCH LABORATORY, Co., Ltd., the luminance of the respective test specimens were measured under the conditions as shown in the following Table 3, and the diffusion rate was calculated according to the following formula.

Table 3

| (Measuring conditions) | |
| --- | --- |
| Incident angle | 0˚ |
| Viewing angle | 0˚ |
| Light-receiving range | 0˚ to 90˚ |
| Light flux diaphragm | 2.0 |
| Light-receiving diaphragm | 3.0 |

$$\text{Diffusion rate (\%)} = \{[(20° \text{ luminance}) + (70° \text{ luminance})]/[(5° \text{ luminance}) \times 2]\} \times 100$$

(6) Initial hue (YI):

The test specimens molded in Examples and Comparative Examples were subjected to measurement of an initial hue (YI) thereof using a spectroscopic hue meter "SE-2000 Model" produced by Nippon Denshoku Kogyo Co., Ltd.

(7) Unevenness of thickness of product:

The thicknesses of the product on the gate side and the side opposite to the gate were measured to obtain a difference therebetween.

(8) Unevenness of luminance (%):

The test specimens molded in Examples and Comparative Examples were subjected to measurement of luminance using a brightness meter "BM-5A" produced by Topcon Inc., at total 9 positions of each test specimen including 3 positions in the vicinity of an injection gate for molten resin, 3 positions at a central portion and 3 positions on the side opposite to the gate. The maximum value (Lmax), the minimum value (Lmin) and the average value (Lave) of the luminance were measured, and the unevenness (%) of the luminance was calculated from these measured values according to the following formula.

$$\text{Unevenness of luminance (\%)} = \{(\text{Lmax} - \text{Lmin})/\text{Lave}\} \times 100$$

(9) Deposits on metal mold:

Upon injection molding, occurrence of deposits on the metal mold after completion of 200 shots was visually observed, and evaluated by the ratings as shown in the following Table 4.

Table 4

| | |
|---|---|
| ◎ | considerably small amount of deposits on mold |
| ○ | Small amount of deposits on mold |
| Δ | Large amount of deposits on mold |
| × | Considerably large amount of deposits on mold |

Production Example 1:

8.00 kg (35 mol) of 2,2-bis(4-hydroxyphenyl)propane (BPA) and 50 g of hydrosulfite were added to 34 L of a 8 wt% sodium hydroxide aqueous solution, and dissolved therein. The resultant solution was mixed with 11 L of dichloromethane. While maintaining the obtained solution at 20°C under stirring at a reverse rotating speed of 180 rpm using an agitator manufactured by Shimadzu Corporation, 4.0 kg of phosgene was blown into the solution over 30 min. After completion of blowing the phosgene, 6L of an 8 wt% sodium hydroxide aqueous solution, 14 L of dichloromethane and 404 g (2.7 mol) of p-tert-butyl phenol were added to the obtained reaction solution, and the resultant mixture was violently stirred at a reverse rotating speed of 210 rpm to allow the mixture to be emulsified. Thereafter, the obtained emulsion was mixed with 10 mL of triethyl amine as a polymerization catalyst and polymerized for about 1 hr. The thus obtained polymerization reaction solution was separated into a water phase and an organic phase. The thus separated organic phase was neutralized with phosphoric acid, and repeatedly washed with pure water until the pH value of the wash solution became neutral. The thus purified polycarbonate solution was subjected to distillation to remove the organic solvent therefrom, thereby obtaining a polycarbonate in the form of a powder. As a result of subjecting the obtained polycarbonate to measurement of viscosity and GPC analysis, it was confirmed that the obtained polymer (hereinafter referred to merely as "PC-1") had a viscosity-average molecular weight (Mv) of 14,000 and a ratio Mw/Mn of 2.4, and the content of low-molecular weight component having a molecular weight of less than 1,000 in the polymer was 1.8%.

Production Example 2:

The same procedure as defined in Production Example 1 was conducted except that the amount of p-tert-butyl phenol used is changed to 376 g (2.5 mol), thereby obtaining a polycarbonate in the form of a powder. As a result of subjecting the obtained polycarbonate to measurement of viscosity and GPC analysis, it was confirmed that the obtained polymer (hereinafter referred to merely as "PC-2") had a viscosity-average molecular weight (Mv) of 14,500 and a ratio Mw/Mn of 2.4, and the content of low-molecular weight component having a molecular weight of less than 1,000 in the polymer was 1.8%.

Production Example 3:

8.00 kg (35 mol) of 2,2-bis(4-hydroxyphenyl)propane (BPA) and 50 g of hydrosulfite were added to 34 L of a 8 wt% sodium hydroxide aqueous solution, and dissolved therein. The resultant solution was mixed with 11 L of dichloromethane and 202 g (1.35 mol) of p-tert-butyl phenol. While maintaining the obtained solution at 20°C under stirring at a reverse rotating speed of 180 rpm using an agitator manufactured by Shimadzu Corporation, 4.0 kg of phosgene was blown into the solution over 30 min. After completion of blowing the phosgene, 6L of an 8 wt% sodium hydroxide aqueous solution, 14 L of dichloromethane and 202 g (1.35 mol) of p-tert-butyl phenol were added to the obtained reaction solution, and the resultant mixture was violently stirred at a reverse rotating speed of 210 rpm to allow the mixture to be emulsified. Thereafter, the obtained emulsion was mixed with 10 mL of triethyl amine as a polymerization catalyst and polymerized for about 1 hr. The thus obtained polymerization reaction solution was separated into a water phase and an organic phase. The thus separated organic phase was neutralized with phosphoric acid, and repeatedly washed with pure water until the pH value of the wash solution became neutral. The thus purified polycarbonate solution was subjected to distillation to remove the organic solvent therefrom, thereby obtaining a polycarbonate in the form of a powder. As a result of subjecting the obtained polycarbonate to measurement of viscosity and GPC analysis, it was confirmed that the obtained polymer (hereinafter referred to merely as "PC-3") had a viscosity-average molecular weight (Mv) of 14,000 and a ratio Mw/Mn of 2.6, and the content of low-molecular weight component having a molecular weight of less than 1,000 in the polymer was 2.2%.

Production Example 4:

8.00 kg (35 mol) of 2,2-bis(4-hydroxyphenyl)propane (BPA) and 50 g of hydrosulfite were added to 34 L of a 8 wt% sodium hydroxide aqueous solution, and dissolved therein. The resultant solution was mixed with 11 L of dichloromethane and 404 g (2.7 mol) of p-tert-butyl phenol. While maintaining the obtained solution at 20°C under stirring at a reverse rotating speed of 180 rpm using an agitator manufactured by Shimadzu Corporation, 4.0 kg of phosgene was blown into the solution over 30 min. After completion of blowing the phosgene, 6L of an 8 wt% sodium hydroxide aqueous solution and 14 L of dichloromethane were added to the obtained reaction solution, and the resultant mixture was violently stirred at a reverse rotating speed of 210 rpm to allow the mixture to be emulsified. Thereafter, the obtained emulsion was mixed with 10 mL of triethyl amine as a polymerization catalyst and polymerized for about 1 hr. The thus obtained polymerization reaction solution was separated into a water phase and an organic phase. The thus separated organic phase was neutralized with phosphoric acid, and repeatedly washed with pure water until the pH value of the wash solution became neutral. The thus purified polycarbonate solution was subjected to distillation to remove the organic solvent therefrom, thereby obtaining a polycarbonate in the form of a powder. As a result of subjecting the obtained polycarbonate to measurement of viscosity and GPC analysis, it was confirmed that the obtained polymer (hereinafter referred to merely as "PC-4") had a viscosity-average molecular weight (Mv) of 14,000 and a ratio Mw/Mn of 2.9, and the content of low-molecular weight component having a molecular weight of less than 1,000 in the polymer was 2.6%.

Examples 1 to 5 and Comparative Examples 1 to 4:

After mixing the respective raw materials with each other at the mixing ratios shown in Tables 5 and 6, the resultant mixture was melted and kneaded together using a vented single-screw extruder "VS-40" manufactured by Tanabe Plastics Machine Co., Ltd., having a screw diameter of 40 mm at a cylinder temperature of 250°C, and extruded into strands therefrom. The thus extruded strands were cut to obtain pellets of a resin composition. The pellets were dried at 120°C for 5 to 7 hr using a hot air circulating-type dryer.

The thus dried pellets were molded using an injection molding machine "MD650S4" manufactured by Niigata Machine Techno Co., Ltd., at a resin temperature of 300°C, a mold temperature of 100°C and a molding cycle of 60 sec, thereby obtaining 200 shots of plates each having a size of 727 mm x 415 mm x 2 mm in thickness. The fixed-side surface of the metal mold was formed into prism-shaped irregular pattern having a pitch of 50 $\mu$m and an apex angle of 90°. The 200th-shot plate was used as a test specimen and subjected to the above evaluation procedures. The results are shown in Tables 5 and 6.

<div align="center">Table 5</div>

| | Examples | | | | |
|---|---|---|---|---|---|
| | 1 | 2 | 3 | 4 | 5 |
| Composition | | | | | |
| PC-1 | 100 | 100 | - | - | - |
| PC-2 | - | - | 100 | 100 | - |
| PC-3 | - | - | - | - | 100 |
| PC-4 | - | - | - | - | - |
| PC-5 | - | - | - | - | - |
| PC-6 | - | - | - | - | - |
| Fine particles | 2.0 | 2.0 | 2.0 | 2.0 | 2.0 |
| Fluorescent brightener | - | 0.002 | - | 0.002 | - |
| Evaluation of properties | | | | | |
| Transmittance (%) | 65.0 | 64.8 | 65.0 | 64.8 | 64.9 |
| Diffusion rate (%) | 50.3 | 50.2 | 50.2 | 50.1 | 50.3 |
| Initial hue (YI) | 18.0 | 16.0 | 18.0 | 16.0 | 18.1 |
| Unevenness of thickness of product (mm) | 0.04 | 0.04 | 0.04 | 0.04 | 0.04 |
| Unevenness of luminance (%) | 1.3 | 1.4 | 1.4 | 1.5 | 1.3 |
| Deposits on mold | ◎ | ◎ | ◎ | ◎ | ○ |

<div align="center">Table 6</div>

| | Comparative Examples | | | |
|---|---|---|---|---|
| | 1 | 2 | 3 | 4 |
| Composition | | | | |
| PC-1 | - | - | - | - |
| PC-2 | - | - | - | - |
| PC-3 | - | - | - | - |
| PC-4 | 100 | - | - | - |
| PC-5 | - | 100 | 100 | - |
| PC-6 | - | - | - | 100 |
| Fine particles | 2.0 | 2.0 | 2.0 | 2.0 |
| Fluorescent brightener | - | - | 0.002 | - |
| Evaluation of properties | | | | |
| Transmittance (%) | 64.9 | 65.0 | 64.8 | 65.4 |
| Diffusion rate (%) | 50.4 | 50.3 | 50.0 | 49.8 |
| Initial hue (YI) | 18.2 | 18.2 | 15.8 | 18.3 |
| Unevenness of thickness of product (mm) | 0.04 | 0.05 | 0.05 | 0.10 |

(continued)

| Evaluation of properties | | | | |
|---|---|---|---|---|
| Unevenness of luminance (%) | 1.3 | 2.2 | 2.1 | 5.0 |
| Deposits on mold | Δ | ◎ | ◎ | ◎ |

From the results of the above Examples and Comparative Examples, the followings were confirmed. That is, when the aromatic polycarbonate resins having a viscosity-average molecular weight of not less than 12,000 and less than 15,000 in which the content of low-molecular weight component having a molecular weight of less than 1,000 was not more than 2.5%, were used as the raw material, it was possible to produce light diffusion plates for large-size liquid crystal displays, which are free from formation of deposits on the metal mold upon injection molding, and excellent in all of properties including a dimensional stability, a mechanical strength and optical properties (less unevenness of luminance).

## Claims

1.   Use of a polycarbonate resin composition for reducing the luminance unevenness of light diffusion plates, the composition comprising (A) 100 parts by weight of an aromatic polycarbonate resin having a viscosity-average molecular weight of not less than 12,000 and less than 15,000 and containing a low-molecular weight component having a molecular weight of less than 1,000 in an amount of not more than 2.5% by weight, and
(B) 0.2 to 20 parts by weight of fine particles having a weight-average particle diameter of 0.7 to 30 $\mu$m;
wherein the aromatic polycarbonate resin is produced by using bisphenol A as a raw material.

2.   The use according to claim 1, wherein a ratio of a weight-average molecular weight (Mw) to a number-average molecular weight (Mn) of the aromatic polycarbonate resin (A) is in the range of from 1.5 to 2.7 as measured in terms of polystyrene by gel permeation chromatography.

3.   The use according to claim 1 or 2, further comprising (C) a fluorescent brightener in an amount of 0.0005 to 0.1 parts by weight on the basis of 100 parts by weight of a total amount of the aromatic polycarbonate resin (A) and the fine particles (B).

## Patentansprüche

1.   Verwendung einer Polycarbonatharzzusammensetzung zum Reduzieren der Luminanz-Ungleichmäßigkeit von Lichtdiffusionsplatten, wobei die Zusammensetzung (A) 100 Gew.-Teile eines aromatischen Polycarbonatharzes mit einem viskositätsgemittelten Molekulargewicht von nicht weniger als 12.000 und weniger als 15.000, das eine Komponente niederen Molekulargewichts mit einem Molekulargewicht von weniger als 1.000 in einer Menge von nicht mehr als 2,5 Gew.% enthält, und (B) 0,2 bis 20 Gew.-Teile von Feinpartikeln mit einem gewichtsgemittelten Teilchendurchmesser von 0,7 bis 30 $\mu$m umfasst;
worin das aromatische Polycarbonatharz unter Verwendung von Bisphenol A als Rohmaterial hergestellt wird.

2.   Verwendung gemäß Anspruch 1, worin ein Verhältnis eines gewichtsgemittelten Molekulargewichts (Mw) zu einem zahlengemittelten Molekulargewicht (Mn) des aromatischen Polycarbonatharzes (A) im Bereich von 1,5 bis 2,7 liegt, wie durch Gelpermeationschromatografie in Bezug auf Polystyrol gemessen.

3.   Verwendung gemäß Anspruch 1 oder 2, weiterhin umfassend (C) einen fluoreszierenden Aufheller in einer Menge von 0,0005 bis 0,1 Gew.-Teilen auf Basis von 100 Gew.-Teilen der Gesamtheit des aromatischen Polycarbonatharzes (A) und der Feinpartikel (B).

## Revendications

1.   Utilisation d'une composition de résine de polycarbonate pour réduire l'inégalité de luminance de plaques de diffusion de lumière, la composition comprenant (A) 100 parties en poids d'une résine de polycarbonate aromatique ayant une masse moléculaire moyenne en viscosité non inférieure à 12 000 et inférieure à 15 000 et contenant un composant de faible masse moléculaire ayant une masse moléculaire inférieure à 1 000 en une quantité non supérieure à 2,5 % en poids, et

(B) 0,2 à 20 parties en poids de particules fines ayant un diamètre de particule moyen en poids de 0,7 à 30 μm ; dans laquelle la résine de polycarbonate aromatique est produite en utilisant du bisphénol A en tant que matière première.

2. Utilisation selon la revendication 1, dans laquelle un rapport d'une masse moléculaire moyenne poids (Mw) sur une masse moléculaire moyenne en nombre (Mn) de la résine de polycarbonate aromatique (A) est dans la plage allant de 1,5 à 2,7 telle que mesuré en termes de polystyrène par chromatographie par perméation de gel.

3. Utilisation selon la revendication 1 ou 2, comprenant en outre
(C) un agent fluorescent d'amélioration de brillance en une quantité de 0,0005 à 0,1 partie en poids sur la base de 100 parties en poids d'une quantité totale de la résine de polycarbonate aromatique (A) et des particules fines (B).

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 8134310 A
- JP 2001208917 A
- JP 63033703 A
- JP 1172801 A
- JP 2013925 A
- JP 5173134 A